(19) Europäisches Patentamt
European Patent Office
Office européen des brevets

(11) **EP 2 492 293 B1**

(12) **EUROPEAN PATENT SPECIFICATION**

(45) Date of publication and mention
of the grant of the patent:
**20.09.2017   Bulletin 2017/38**

(51) Int Cl.:
*C08F 10/06* <sup>(2006.01)</sup>   *C08F 110/06* <sup>(2006.01)</sup>
*C08L 23/10* <sup>(2006.01)</sup>   *C08F 255/02* <sup>(2006.01)</sup>
*C08L 51/06* <sup>(2006.01)</sup>   *C09D 151/06* <sup>(2006.01)</sup>
*C08J 9/00* <sup>(2006.01)</sup>   *C08F 4/6592* <sup>(2006.01)</sup>
*C08F 2/00* <sup>(2006.01)</sup>   *C08F 236/06* <sup>(2006.01)</sup>

(21) Application number: **11001635.9**

(22) Date of filing: **28.02.2011**

(54) **Polypropylene composition suitable for extrusion coating**

Polypropylenzusammensetzung, die zur Extrusionsbeschichtung geeignet ist

Composition de polypropylène adaptée au revêtement par extrusion

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.08.2012   Bulletin 2012/35**

(73) Proprietor: **Borealis AG**
**1220 Vienna (AT)**

(72) Inventors:
• **Klimke, Katja**
  **Abu Dhabi (AE)**
• **Tran, Anh Tuan**
  **4222 Langenstein (AT)**

• **Filipe, Susana**
  **4060 Leonding (AT)**
• **Pham, Tung**
  **6900 Bregenz (AT)**
• **Jarzombek, Manfred**
  **4040 Linz (AT)**

(74) Representative: **Kador & Partner**
**Corneliusstraße 15**
**80469 München (DE)**

(56) References cited:
**EP-A1- 1 892 264     EP-A1- 1 900 764
EP-A1- 2 386 584     WO-A1-2010/049370**

**Description**

The present invention relates to a polypropylene composition suitable for extrusion coating or extrusion foaming, a process for the provision of such polypropylene compositions and extrusion coated or extrusion foamed articles and a process for producing the same.

In general, extrusion coating of substrates such as paper, paperboard, fabrics and metal foils with a thin layer of plastic is practiced on a large scale. The coating composition is extruded in a first step whereby the flux of molten polymeric material passes through a flat die to obtain a film having a thickness of a few microns. In the second step, ie. the coating step, the film is laid on a support and passed on a cooling cylinder. Upon cooling, the polymer adheres to its support.

Low density polyethylene (LDPE) is often used in extrusion coating because of the ease in processing although stiffness, barrier properties and temperature resistance of LDPE are not satisfactory. Polypropylene is attractive due to advantages as to heat tolerance and transparency. However polypropylene suffers from bad processability such as high neck-in and low maximum coating speed. The limited processing properties of polypropylene partially can be minimized by high melt strength polypropylene being characterized by branchings in the linear polymer backbone. This can be achieved either through post-reactor treatment, through copolymerization with dienes, or through polymerization with specific catalysts.

High speed extrusion coating asks for relative high melt flow rates $MFR_2$ of 10 g/10min or higher. Such melt flow rates usually can only be obtained by visbreaking, i.e. treatment with peroxide in the absence of dienes. However, the main reaction, i.e. branching reaction, caused by peroxide treatment leading to higher degree of branching unfortunately is always accompanied by beta scission as a side reaction, i.e. significant degradation of the polypropylene. Such degradation is responsible for the formation of gels which limits the use of polypropylene compositions in high demand applications such as in the medical area.

WO 2009/133016 discloses a two component adhesion compositions suitable for extrusion coating comprising a blend of high melt strength polypropylene and one component selected from the group of (i) maleic anhydride-modified polypropylene (MAPP) (ii) maleic anhydride-modified polypropylene wax (iii) polypropylene homopolymer with high melt flow rate or (iv) ethylene-vinyl acetate-based hot melt adhesive. This composition allows extrusion coating only at limited line speeds.

KR 681871B1 is directed to blends of polypropylene copolymers and low density polyethylene for extrusion coating. However, the desired melt flow rate characteristics are obtained by the addition of low density polyethylene leading to limited thermal stability.

EP 1847555 discloses a polypropylene having a low branching index g' which shows pronounced strain hardening at high strain rates, i.e. the faster the material is stretched, the higher the strain hardening index (SHI) and hence the stabler the material. The material originates from in-reactor long chain branching.

Polypropylene having strain hardening behaviour is for example described in EP 1 903 070 reporting polypropylene having a high melt strength due to a large number of side chains (branched polypropylene) leading also to relatively high stiffness. The use of the specific polypropylene is only described for the matrix as far as heterophasic polypropylenes are concerned.

EP 1 847 555 relates to multi-branched polypropylene homo- and copolymers. The material shows extensional melt flow properties leading to high stability in extrusion processes. The use of the specific polypropylene is only described for the matrix in a heterophasic polypropylene.

WO 2010/049370 A1 discloses a HMS polypropylene Daploy™ WB180HMS which has a $MFR_2$ of 6.0g/10min and a SHF (3/2.5) of 2.8 as shown in Table 4 of the present application where this resin has been used as a reference.

EP 2 386 584 A1, a document according to Art. 54(3) EPC, discloses a polypropylene composition suitable for extrusion coating comprising a polypropylene base resin whereby the polypropylene base resin has a MFR (2.16 kg, 230 °C, ISO 1133) of 8 to 24 g/10min and a high viscoelastic LAOS non-linearity factor LAOS-NLF > 2.8, defined as

$$LAOS - NLF = \left| \frac{G_1'}{G_3'} \right|$$

where $G_1'$ - first order Fourier Coefficient

$G_3'$- third order Fourier Coefficient.

There is still the need for improved propylene polymer compositions being suitable for extrusion coating or extrusion foaming for a broad variety of substrates having high melt strength and drawability, excellent processability, low gel content, and being capable of withstanding high temperatures. Such propylene polymer compositions are desirably produced by a relatively simple and inexpensive process. There is particularly the need for propylene polymer compositions being suitable for extrusion coating or extrusion foaming without the need for the addition of processing aids such as LDPE or the use of heterophasic materials.

The present invention is based on the finding that the above object can be achieved by a polypropylene having long chain branching of homogeneous nature and high degree whereby the polypropylene base resin has a MFR (2.16 kg, 230 °C, ISO 1133) of 7 to 35 g/10min and an optical gel index of 1000 or less, measured with an OCS gel counting apparatus on thin cast films with a film thickness of 70 μm which were produced with a chill roll temperature of 40 °C, whereby the polypropylene base resin has a strain hardening factor (SHF) of 3.3 to 7.0 when measured at a strain rate of 3.0 s$^{-1}$ and a Hencky strain of 2.5.

The term "polypropylene composition" used herein denotes compositions consisting of 96 wt.-% polypropylene base resin and stabilizers in an amount of up to 4 wt.-% with respect to the total polypropylene composition.

The term "polypropylene base resin" as used herein further denotes both polypropylene homopolymers and random polypropylene copolymers. A "polypropylene base resin" is a monophasic resin.

A monophasic resin denotes a resin having only one Tg when being subjected to DSC.

Catalyst denotes the organometallic compound containing the reaction centre of the polymerisation.

Catalyst system denotes the mixture of the catalyst, the optional cocatalyst and the optional support.

Visbreaking denotes subjecting a polymer resin to peroxide treatments in the absence of a bifunctionally unsaturated molecule such as a diene.

"A single site catalyst derived polypropylene" denotes a polypropylene having been produced in the presence of a single site catalyst.

The polypropylene base resin according to the present invention is either a polypropylene homopolymer or a random polypropylene copolymer. It is preferred that the polypropylene base resin is a homopolymer.

When the polypropylene base resin is a random polypropylene copolymer the comonomer content preferably is below 15 mol%, more preferably below 10 mol% and most preferably below 4 mol%. The comonomer(s) preferably is/are selected from the group of ethylene and alpha olefins, more preferably ethylene and $C_4$ to $C_{12}$ alpha olefins, most preferably ethylene or butene.

The polypropylene composition according to the present invention comprises a polypropylene base resin having a MFR (2.16 kg, 230 °C, ISO 1133) of 7.0 to 35 g/10min. It is further preferable that the optical gel index is 900 or less, more preferable 800 or less, even more preferable 700 or less or even 500 or less.

The polypropylene composition according to the present invention preferably consists of the polypropylene base resin having a MFR (2.16 kg, 230 °C, ISO 1133) of 7.0 to 35 g/10min, preferably of 7.0 to 30 g/10min, even more preferably of 7.0 to 28 g/10min and preferably having an optical gel index of 900 or less, more preferable 800 or less, even more preferable 700 or less or even 500 or less.

Modifiers may be added to the polypropylene composition as occasion demands. Preferably, the modifiers are selected from poly-1-butene, poly-4-methylpentene-1 as well as mineral fillers like talc or calcium carbonate. Suitable additives include stabilizers, lubricants, nucleating agents, pigments and foaming agents. These modifiers and/or additives may be included during the polymerisation process or after the polymerisation by melt mixing. It is however preferred that the modifiers do not lower the melting temperature of the composition. It is particularly preferred that the polypropylene composition according to the present invention does not contain LDPE, recognizable by the absence of any melting points below 135°C in DSC.

The polypropylene composition according to the present invention is characterized by a polymer structure being mainly responsible for the benefits of the present invention, particularly by the nature of long chain branching which may be expressed by the strain hardening factor being defined as

$$SHF = \frac{\eta_E^+(t,\dot{\varepsilon})}{\eta_{LVE}^+(t)} = \frac{\eta_E^+(t,\dot{\varepsilon})}{3\eta^+(t)}$$

wherein

$\eta_E^+(t,\dot{\varepsilon})$ is the uniaxial extensional viscosity; and

$\eta_{LVE}^+(t)$ is three times the time dependent shear viscosity $\eta^+(t)$ in the linear range of deformation. The determination of the linear viscoelastic envelop in extension $\eta_{LVE}^+(t)$, is based on IRIS Rheo Hub 2008 requiring the calculation of the discrete relaxation time spectrum from the storage and loss modulus data (G', G" (ω)). Details about the method can be found in the experimental part. The strain hardening factor mainly reflects the degree of "dispersion" (heterogeneity) of the branches relative to the polymer backbone. Secondarily the strain hardening factor also provides information about the branching degree.

Yet another method of characterizing the structure of branched polypropylene is the Rheotens measurement. Branched polypropylene shows higher melt strength with increasing shear applied on the polymer such as during melt extrusion. This property is well-known as strain hardening. In the Rheotens test, the strain hardening behaviour of polymers is analysed by Rheotens apparatus (product of Göttfert, Siemensstr. 2, 74711 Buchen, Germany) in which a melt strand is elongated by drawing down with a defined acceleration. The haul-off force F in dependence of draw-down velocity v is recorded. The test procedure is performed at a temperature of 23 ° C. Further details are given in the experimental part. The test results are further detailed in the figures in which:

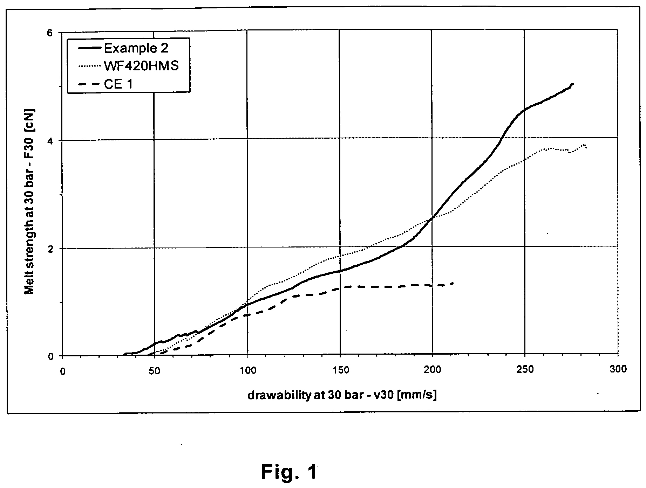

Fig. 1    shows curves of melt strength [cN] at a force of 30 bar vs. draw down velocity [mm/s] at 30 bar of Example 2, Comparative Example CE1 and the commercial standard WF240HMS;

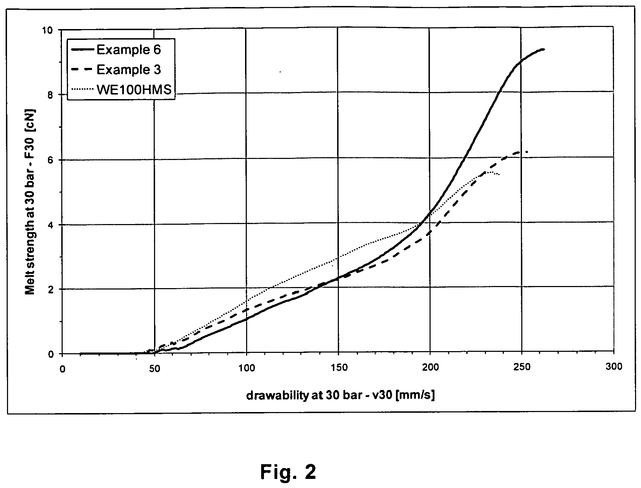

Fig. 2    shows curves of melt strength [cN] at a force of 30 bar vs. draw down velocity [mm/s] at 30 bar of Examples 3 and 6 and the commercial standard WE100HMS;

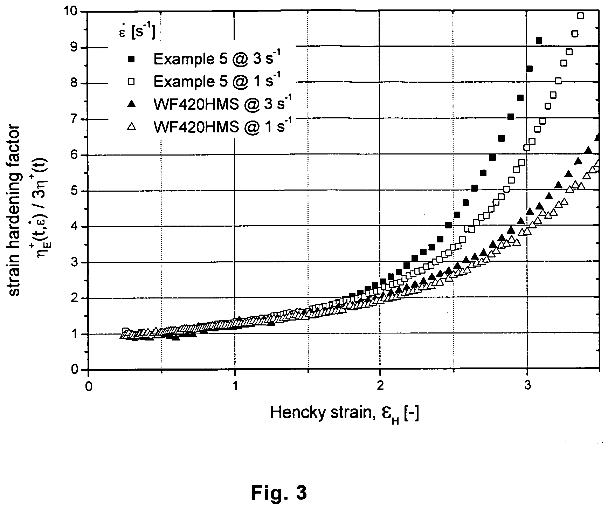

Fig. 3    shows the strain hardening factor expressed as uniaxial extensional viscosity [Pa·s] vs Hencky strain of Example 5 and the commercial standard WF420HMS at a strain rate of 1 $s^{-1}$ and 3 $s^{-1}$; and

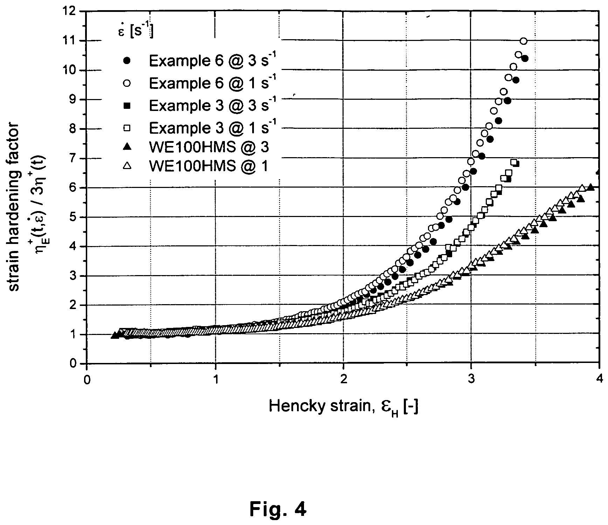

Fig. 4    shows the strain hardening factor expressed as uniaxial extensional viscosity [Pa·s] vs Hencky strain of Examples 3 and 6 and the commercial standard WE100HMS at a strain rate of 1 $s^{-1}$ and 3 $s^{-1}$.

The polypropylene composition according to the present invention preferably includes a polypropylene base resin having a strain hardening factor (SHF) of 3.3 to 7.0, preferably up to 6.5, more preferably up to 6.5 and most preferably 3.3 to 5.0 when measured at a strain rate of 3.0 $s^{-1}$ and a Hencky strain of 2.5.
Moreover, the polypropylene composition according to the present invention preferably includes a polypropylene base resin having a strain hardening factor (SHF) of 1.7 to 6.0, more preferably of 1.75 to 5.5, and most preferably 1.80 to 5.0 when measured at a strain rate of 1.0 $s^{-1}$ and a Hencky strain of 2.0.
It should be understood that the preferred strain hardening factors (SHF) as mentioned above can be present individually but also can be present in combination.
The polypropylene composition according to the present invention further preferably includes a polypropylene base resin having a F30 melt strength of 4 to 18 cN, more preferably 4 to 12 cN and most preferably 4 to 10 cN at 200°C when being subjected to the Rheotens melt strength test as described in the experimental part.
The polypropylene composition according to the present invention preferably has a melting temperature Tm in the range of 135 to 165 °C, more preferably from 140 to 162 °C and most preferably from 150 to 161 °C. High melting temperatures enable the provision of materials capable of withstanding steam sterilization. Higher melting temperatures can be achieved with polypropylene homopolymers and higher crystallinity.
The polypropylene composition according to the present invention preferably includes a polypropylene base resin being characterized by a high F30 melt strength in the rheotens test as described above and at the same time a relatively low melt flow rate $MFR_2$ in the range of 5.0 to 35 g/10 min. Preferably, the polypropylene composition according to the present invention has a $MFR_2$ in the range of 6.0 to 28 g/10 min.
The polypropylene composition according to the present invention has an optical gel index of 1000 or less, measured with an OCS gel counting apparatus on thin cast films with a film thickness of 70 $\mu$m which were produced with a chill roll temperature of 40 °C.
It has now surprisingly been found that a relatively simple and inexpensive process can be used for preparing the polypropylene compositions of the present invention, by processing an intermediate propylene polymer composition. The intermediate propylene polymer may have a $MFR_2$ of 6 g/10 min or lower, preferably 1 g/10 min or lower, more preferably 0.5 g/10 min or lower and even more preferably 0.25 g/10 min or lower.
Accordingly, the present invention is further concerned with a process for the production of the polypropylene composition according to the present invention.
The process according to the present invention involves producing a polypropylene intermediate base resin having a MFR (2.16 kg, 230 °C, ISO 1133) of 6.0 g/10min or lower in the presence of a single site catalyst. The polypropylene intermediate base resin preferably has a MFR (2.16 kg, 230 °C, ISO 1133) of 0.25 to 5.0 g/10min, even more preferably 0.5 to 2 g/10 min.
The obtained polypropylene intermediate base resin is then mixed with a peroxide masterbatch composition and an oligomeric diene masterbatch composition to form a pre-mixed material; and the pre-mixed material is melt mixed in a melt mixing device at a barrel temperature in the range of 180 to 300 °C.

In the sense of the present invention, "masterbatch" means a concentrated premix of a propylene polymer with the free radical forming agent (peroxide) and the oligomeric diene, repectively. The peroxide masterbatch composition is provided in a concentration from 0.5 to 4.0 wt.%, preferably 0.8 to 3.0 wt.%, even more preferably 0.9 to 2.7 wt.%, based on the total weight of the propylene polymer composition and the diene masterbatch composition is provided in a concentration from 0.5 to 20 wt.%, preferably 0.8 to 15 wt.%, even more preferably 0.9 to 12 wt.%, based on the total weight of the propylene polymer composition.

The peroxide compound may preferably be contained in the peroxide masterbatch composition in a range of from 5 to 50 wt., based on the total composition of the masterbatch. The oligomeric diene may preferably be contained in the diene masterbatch composition in a range of from 20 to 65 wt.%, based on the total composition of the masterbatch.

According to the present invention it was found that using the above masterbatch compositions instead of adding a peroxide component and a diene component in pure form to the polypropylene resin powder in one or more pre-mixing steps prior to the melt-mixing step as conventionally done, much simpler process equipment can be employed. With the inventive masterbatch compositions any well-mixing extruder is useful and there is no need for specific sorption and/or dosing equipment as is required when adding the peroxide and diene component in pure form.

It is essential that the whole process does not involve visbreaking, i.e. subjecting any intermediate product to peroxide treatment in the absence of a diene such as butadiene.

Suitable dienes are conjugated or non-conjugated dienes, linear or branched dienes containing 4 to 20 carbon atoms. Preferred dienes include isoprene, 2,3-dimethylbutadiene, 1,3-pentadiene, 1,3-hexadiene, 1,4 octadiene and butadiene. The most preferred diene is butadiene.

The polypropylene intermediate base resin is pre-mixed with the diene masterbatch and the peroxide masterbatch in a powder mixing device, like a horizontal mixer with paddle stirrer. The pre-mixing preferably is carried out at a temperature of the polymer powder of 25 to 80°C, most preferably in the range of 30 to 75°C. The residence time of the polymer in the pre-mixing step is preferably 5 to 30 minutes, more preferably 8 to 20 minutes.

According to a preferred embodiment of the inventive process the peroxide masterbatch composition and the diene masterbatch composition are respectively prepared by absorbing the active ingredient (peroxide or diene) onto highly porous pelletized polypropylene, preferably having a void content in the range of 50 to 90% and a bulk density in the range of 40 to 350 kg/m$^3$ as determined in accordance to ISO 60 resp. DIN 53466.

The propylene polymers into which the peroxide or the oligomeric diene compound are incorporated to form the respective masterbatch composition is preferably a foamed propylene polymer, more preferably a foamed propylene homopolymer. According to preferred embodiments an oligomeric diene masterbatch composition may comprise 40 to 60 wt.% of a foamed homopolymer and 60 to 40 wt.% of polybutadiene, such as ACCUREL® PA104 (supplier: Membrana GmbH, DE). A preferred peroxide masterbatch composition may be TRIGONOX® BPIC 37.5PP-PD (supplier: AKZO NOBEL Polymer Chemicals BV, NL) which consists of 37.5 wt.% peroxide (tert-butylperoxy isopropyl carbonate), 12.5 wt.% isododecane and 50 wt.% porous polypropylene.

The pre-mixed material is then melt-mixed at a barrel temperature of 180 to 300 °C, preferably in a continuous melt mixing device like a single screw extruder, a co-rotating twin screw extruder or a co-kneader.

The barrel temperature preferably is in the range of 200 to 280°C. More preferably a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures and fulfilling the following relation: T1 < T3 < T2. Barrel temperature T1 is preferably in the range of 180 to 210 °C. Barrel temperature T2 (in the kneading zone) preferably is in the range of 280 to 300 °C. Barrel temperature T3 (in the die zone) preferably is in the range of 260 to 290 °C.

The screw speed of the melt mixing device preferably is adjusted to a range from 150 to 800 rotations per minute (rpm).

Following the melt-mixing step, the resulting polymer melt may be pelletized either in an underwater pelletizer or after solidification of one or more strands in a waterbath in a strand pelletizer.

The present invention is further concerned with a polypropylene composition comprising a polypropylene base resin having a MFR (2.16 kg, 230 °C) of 5 to 35 g/10min obtainable by:

producing a polypropylene intermediate base resin having a MFR (2.16 kg, 230 °C) of 6.0 g/10min or lower, determined according to ISO 1133 in the presence of a single site catalyst;

mixing the polypropylene intermediate base resin with a peroxide masterbatch and a diene masterbatch at a temperature of 20 to 90 °C for at least 2 minutes to form a pre-mixed material;

melt mixing the pre-mixed material in a melt mixing device at a barrel temperature in the range of 180 to 300 °C.

The melt mixing device preferably includes a feed zone, a kneading zone and a die zone, whereby an initial barrel temperature T1 is maintained in the feed zone, a barrel temperature T2 is maintained in the kneading zone and a die barrel temperature T3 is maintained in the die zone. Preferably, the barrel temperatures T1, T2, and T3 satisfy the following relation: T1 < T3 < T2.

The polypropylene composition according to the present invention is preferably obtainable by pre-mixing the propylene polymer in the presence of 0.5 to 4.0 wt-%, preferably in the presence of 0.8 to 3.0 wt.-%, more preferably in the presence of 0.9 to 2.7 wt.-% of a peroxide masterbatch composition and in the presence of 0.5 to 20 wt.-%, preferably 0.8 to 15 wt.-%, more preferably 0.9 to 12 wt-% of an oligomeric diene masterbatch composition.

Peroxides which are thermally decomposable upon the conditions of heating and melting the polymer/peroxide mixture and which meet the requirement of having a half life time t (1/2) at 110 °C of greater than 6 min and a half life time t (1/2) at 150 °C of greater than 6 min are suitable.

The following organic peroxides are suitable for the above process: dibenzoyl peroxide, tert.-butyl peroxy-2-ethylhexanoate, tert.-amyl peroxy-2- ethylhexanoate, tert.-butyl peroxydiethylacetate, 1,4-di(tert.-butylperoxycarbo)cyclohexane, tert.-butyl peroxyisobutyrate, 1,1-di(tert.-butylperoxy)-3,3,5-trimethyl-cyclohexane, methyl isobutyl ketone peroxide, 2,2-di(4,4-di(tert.-butylperoxy)cyclohexyl)propane, 1,1-di(tert.-butylperoxy) cyclohexane, tert.-butyl peroxy-3,5,5-trimethylhexanoate, tert.-amylperoxy-2-ethylhexyl carbonate, 2,2-di(tert.-butylperoxy)butane, tert.-butylperoxy isopropyl carbonate, tert.-butylperoxy 2-ethylhexyl carbonate, tert.-butyl peroxyacetate, tert.-butyl peroxybenzoate, di-tert.-amyl peroxide and mixtures of these organic peroxides.

As the oligomeric diene those species are suitable which can be polymerized with the aid of free radicals, such as 1,3-butadiene, chloroprene, cyclohexadiene, cyclopentadiene, 2,3-dimethylbutadiene, heptadiene, hexadiene, isoprene and 1,4-pentadiene and mixtures of these oligomeric dienes. The dienes may preferably have a molecular weight Mn of not more than 10,000 g/mol, or not more than 5,000 g/mol or not more than 3,000 g/mol. These dienes may be synthesised from one ore more low molecular weight dienes such as polybutadienes, especially where the different microstructures in the polymer chain, i. e. 1,4-cis, 1,4-trans and 1,2-vinyl are predominantly in the 1,2-vinyl configuration; or copolymers of butadiene and styrene having 1,2-vinyl in the polymer chain. The 1,2-vinyl content in the diene may preferably be in the range from 30 to 60%, preferably 35 to 55% or 45 to 55%.

Even more preferably the polypropylene composition according to the present invention is obtainable by pre-mixing in the presence of preferably 0.8 to 3.0 wt-%, more preferably 0.9 to 2.7 wt.-% of a masterbatch of tert-butylperoxy isopropyl carbonate (CAS No. 2372-21-6) and a foamed polypropylene homopolymer, this compound being commercially available as TRIGONOX® BPIC 37.5PP-PD (supplier: AKZO NOBEL Polymer Chemicals BV, NL) which consists of 37.5 wt.% peroxide (tert-butylperoxy isopropyl carbonate), 12.5 wt.% isododecane and 50 wt.% porous polypropylene, and 0.9 to 12 wt.-% of a masterbatch consisting of liquid low molecular weight polybutadiene (commercially available as Lithene® PH from Synthomer, UK) and a foamed polypropylene homopolymer, this compound being commercially available as ACCUREL® PA104 (supplier: Membrana GmbH, DE).

It should be understood that the addition of the diene and the peroxide may be achieved at once in the pre-mixing stage or may be split up in two additions during said pre-mixing stage.

The polypropylene intermediate base resin having a MFR (2.16 kg,230 °C) of 6.0 g/10min or lower, determined according to ISO 1133 is preferably obtainable by a catalyst system comprising a single site catalyst, preferably an asymmetric single site catalyst such as an asymmetric metallocene catalyst. According to one specific embodiment the catalyst system has a porosity of less than 1.40 ml/g, more preferably less than 1.30 ml/g and most preferably less than 1.00 ml/g. The porosity has been measured according to DIN 66135 ($N_2$). In another preferred embodiment the porosity is below detection limit when determined with the method applied according to DIN 66135.

It is further preferred that the polypropylene intermediate base resin is prepared by using such a single site polymerization catalyst so that the polypropylene may assume a narrow molecular weight distribution Mw/Mn in the range of from 1.5 to 4.0. preferably in the range of from 1.8 to 3.5 and even more preferably in the range of from 1.9 to 3.2. Methods for determining the molecular weight distribution Mw/Mn are described in the example section below.

The catalyst system may further comprise an activator as a cocatalyst, as described in WO 03/051 934. An asymmetric metallocene catalyst according to a preferred embodiment of the present invention is a catalyst comprising at least two organic ligands which differ in their chemical structure.

Furthermore it is preferred, that the catalyst system has a surface area of less than 25 $m^2$/g, yet more preferred less than 20 $m^2$/g, still more preferred less than 15 $m^2$/g, yet still less than 10 $m^2$/g and most preferred less than 5 $m^2$/g. The surface area according to this invention is measured according to ISO 9277 ($N_2$).

It is in particular preferred that the catalytic system according to this invention comprises an asymmetric catalyst, i.e. a catalyst as defined below. In a specific embodiment the porosity of the catalyst system is not detectable when applying the method according to DIN 66135 ($N_2$) and has a surface area measured according to ISO 9277 ($N_2$) less than 5 $m^2$/g.

Preferably, the asymmetric catalyst employed comprises an organometallic compound of a transition metal of group 3 to 10 or the periodic table (IUPAC) or of an actinide or lanthanide.

The asymmetric catalyst is more preferably of a transition metal compound of formula (I)

$$(L)_m R_n MX_q \qquad (I)$$

wherein

M is a transition metal of group 3 to 10 or the periodic table (IUPAC), or of an actinide or lantanide,
each X is independently a monovalent anionic ligand, such as $\sigma$-ligand,
each L is independently an organic ligand which coordinates to M,
R is a bridging group linking two ligands L,
m is 2 or 3,
n is 0 or 1,
q is 1,2 or 3,
m+q is equal to the valency of the metal, and
with the proviso that at least two ligands "L" are of different chemical structure.

In a more preferred definition, each "L" is independently

(a) a substituted or unsubstituted cycloalkyldiene, i.e. a cyclopentadiene, or a mono-, bi- or multifused derivative of a cycloalkyldiene, i.e. a cyclopentadiene, which optionally bear further substituents and/or one or more hetero ring atoms from a Group 13 to 16 of the Periodic Table (IUPAC); or

(b) an acyclic, $\eta^1$- to $\eta^4$- or $\eta^6$-ligand composed of atoms from Groups 13 to 16 of the Periodic Table, and in which the open chain ligand may be fused with one or two, preferably two, aromatic or non-aromatic rings and/or bear further substituents; or

(c) a cyclic $\sigma$-, $\eta^1$- to $\eta^4$- or $\eta^6$-, mono-, bi- or multidentate ligand composed of unsubstituted or substituted mono-, bi- or multicyclic ring systems selected from aromatic or non-aromatic or partially saturated ring systems and containing carbon ring atoms and optionally one or more heteroatoms selected from Groups 15 and 16 of the Periodic Table.

The term "$\sigma$-ligand" is understood in the whole description in a known manner, i.e. a group bonded to the metal at one or more places via a sigma bond. A preferred monovalent anionic ligand is halogen, in particular chlorine (CI).
In a preferred embodiment, the asymmetric catalyst is preferably of a transition metal compound of formula (I)

$$(L)_m R_n MX_q \qquad (I)$$

wherein

M is a transition metal of group 3 to 10 or the periodic table (IUPAC), or of an actinide or lantanide,
each X is independently a monovalent anionic ligand, such as $\sigma$-ligand,
each L is independently an organic ligand which coordinates to M, wherein the organic ligand is an unsaturated organic cyclic ligand, more preferably a substituted or unsubstituted, cycloalkyldiene, i.e. a cyclopentadiene, or a mono-, bi- or multifused derivative of a cycloalkyldiene, i.e. a cyclopentadiene, which optionally bear further substituents and/or one or more hetero ring atoms from a Group 13 to 16 of the Periodic Table (IUPAC),
R is a bridging group linking two ligands L,
m is 2 or 3,
n is 0 or 1,
q is 1,2 or 3,
m+q is equal to the valency of the metal, and
with the proviso that at least two ligands "L" are of different chemical structure.

According to a preferred embodiment said asymmetric catalyst compound (I) is a group of compounds known as metallocenes. Said metallocenes bear at least one organic ligand, generally 1, 2 or 3, e.g. 1 or 2, which is $\eta$-bonded to the metal, e.g. a $\eta^{2-6}$-ligand, such as a $\eta^5$-ligand. Preferably, a metallocene is a Group 4 to 6 transition metal, more preferably zirconium, which contains at least one $\eta^5$-ligand.
Preferably the asymmetric catalyst compound has a formula (II):

$$(Cp)_m R_n MX_q \qquad (II)$$

wherein

M is Zr, Hf or Ti, preferably Zr
each X is independently a monovalent anionic ligand, such as σ-ligand, each Cp is independently an unsaturated organic cyclic ligand which coordinates to M,
R is a bridging group linking two ligands L,
m is 2,
n is 0 or 1, more preferably 1,
q is 1,2 or 3, more preferably 2,
m+q is equal to the valency of the metal, and
at least one Cp-ligand, preferably both Cp-ligands, is(are) selected from the group consisting of unsubstituted cyclopenadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl,
with the proviso in case both Cp-ligands are selected from the above stated group that both Cp-ligands must chemically differ from each other.

Preferably, the asymmetric catalyst is of formula (II) indicated above, wherein
M is Zr
each X is Cl,
n is 1, and
q is 2.

Preferably both Cp-ligands have different residues to obtain an asymmetric structure.

Preferably, both Cp-ligands are selected from the group consisting of substituted cyclopentadienyl-ring, substituted indenyl-ring, substituted tetrahydroindenyl-ring, and substituted fluorenyl-ring wherein the Cp-ligands differ in the substituents bonded to the rings.

The optional one or more substituent(s) bonded to cyclopentadienyl, indenyl, tetrahydroindenyl, or fluorenyl may be independently selected from a group including halogen, hydrocarbyl (e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR''$_3$, -OSiR''$_3$, -SR'', -PR''$_2$ and -NR''$_2$, wherein each R'' is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl.

More preferably both Cp-ligands are indenyl moieties wherein each indenyl moiety bear one or two substituents as defined above. More preferably each Cp-ligand is an indenyl moiety bearing two substituents as defined above, with the proviso that the substituents are chosen in such are manner that both Cp-ligands are of different chemical structure, i.e both Cp-ligands differ at least in one substituent bonded to the indenyl moiety, in particular differ in the substituent bonded to the five member ring of the indenyl moiety.

Still more preferably both Cp are indenyl moieties wherein the indenyl moieties comprise at least at the five membered ring of the indenyl moiety, more preferably at 2-position, a substituent selected from the group consisting of alkyl, such as $C_1$-$C_6$ alkyl, e.g. methyl, ethyl, isopropyl, and trialkyloxysiloxy, wherein each alkyl is independently selected from $C_1$-$C_6$ alkyl, such as methyl or ethyl, with proviso that the indenyl moieties of both Cp must chemically differ from each other, i.e. the indenyl moieties of both Cp comprise different substituents.

Still more preferred both Cp are indenyl moieties wherein the indenyl moieties comprise at least at the six membered ring of the indenyl moiety, more preferably at 4-position, a substituent selected from the group consisting of a $C_6$-$C_{20}$ aromatic ring moiety, such as phenyl or naphthyl, preferably phenyl, which is optionally substituted with one or more substituents, such as $C_1$-$C_6$ alkyl, and a heteroaromatic ring moiety, with proviso that the indenyl moieties of both Cp must chemically differ from each other, i.e. the indenyl moieties of both Cp comprise different substituents.

Yet more preferably both Cp are indenyl moieties wherein the indenyl moieties comprise at the five membered ring of the indenyl moiety, more preferably at 2-position, a substituent and at the six membered ring of the indenyl moiety, more preferably at 4-position, a further substituent, wherein the substituent of the five membered ring is selected from the group consisting of alkyl, such as $C_1$-$C_6$ alkyl, e.g. methyl, ethyl, isopropyl, and trialkyloxysiloxy, wherein each alkyl is independently selected from $C_1$-$C_6$ alkyl, such as methyl or ethyl, and the further substituent of the six membered ring is selected from the group consisting of a $C_6$-$C_{20}$ aromatic ring moiety, such as phenyl or naphthyl, preferably phenyl, which is optionally substituted with one or more substituents, such as $C_1$-$C_6$ alkyl, and a heteroaromatic ring moiety, with proviso that the indenyl moieties of both Cp must chemically differ from each other, i.e. the indenyl moieties of both Cp comprise different substituents. It is in particular preferred that both Cp are idenyl rings comprising two substituents each and differ in the substituents bonded to the five membered ring of the idenyl rings.

Concerning the moiety "R" it is preferred that "R" has the formula (III)

$$-Y(R')_2- \qquad (III)$$

wherein

Y is C, Si or Ge, and
R' is $C_1$ to $C_{20}$ alkyl, $C_6$-$C_{12}$ aryl, or $C_7$-$C_{12}$ arylalkyl.

In case both Cp-ligands of the asymmetric catalyst as defined above, in particular case of two indenyl moieties, are linked with a bridge member R, the bridge member R is typically placed at 1-position. The bridge member R may contain one or more bridge atoms selected from e.g. C, Si and/or Ge, preferably from C and/or Si. One preferable bridge R is - $Si(R')_2$-, wherein R' is selected independently from one or more of e.g. $C_1$-$C_{10}$ alkyl, $C_1$-$C_{20}$ alkyl, such as $C_6$-$C_{12}$ aryl, or $C_7$-$C_{40}$, such as $C_7$-$C_{12}$ arylalkyl, wherein alkyl as such or as part of arylalkyl is preferably $C_1$-$C_6$ alkyl, such as ethyl or methyl, preferably methyl, and aryl is preferably phenyl. The bridge -$Si(R')_2$- is preferably e.g. -$Si(C_1$-$C_6$ alkyl$)_2$-, - $Si(phenyl)_2$- or -$Si(C_1$-$C_6$ alkyl)(phenyl)-, such as -$Si(Me)_2$-.

In a preferred embodiment the asymmetric catalyst is defined by the formula (IV)

$$(Cp)_2 R_1 Zr X_2 \qquad (IV)$$

wherein

each X is independently a monovalent anionic ligand, such as σ-ligand, in particular halogen
both Cp coordinate to M and are selected from the group consisting of unsubstituted cyclopentadienyl, unsubstituted indenyl, unsubstituted tetrahydroindenyl, unsubstituted fluorenyl, substituted cyclopenadienyl, substituted indenyl, substituted tetrahydroindenyl, and substituted fluorenyl,
with the proviso that both Cp-ligands must chemically differ from each other, and
R is a bridging group linking two ligands L,
wherein R is defined by the formula (III)

$$-Y(R')_2- \qquad (III)$$

wherein

Y is C, Si or Ge, and
R' is $C_1$ to $C_{20}$ alkyl, $C_6$-$C_{12}$ aryl, or $C_7$-$C_{12}$ arylalkyl.

More preferably the asymmetric catalyst is defined by the formula (IV), wherein both Cp are selected from the group consisting of substituted cyclopenadienyl, substituted indenyl, substituted tetrahydroindenyl, and substituted fluorenyl.

Yet more preferably the asymmetric catalyst is defined by the formula (IV), wherein both Cp are selected from the group consisting of substituted cyclopentadienyl, substituted indenyl, substituted tetrahydroindenyl, and substituted fluorenyl with the proviso that both Cp-ligands differ in the substituents, i.e. the subtituents as defined above, bonded to cyclopentadienyl, indenyl, tetrahydroindenyl, or fluorenyl.

Still more preferably the asymmetric catalyst is defined by the formula (IV), wherein both Cp are indenyl and both indenyl differ in one substituent, i.e. in a substituent as defined above bonded to the five member ring of indenyl.

It is in particular preferred that the asymmetric catalyst is a non-silica supported catalyst as defined above, in particular a metallocene catalyst as defined above.

In a preferred embodiment the asymmetric catalyst is dimethylsilyl [(2-methyl-(4'-tert.butyl)-4-phenyl-indenyl)(2-isopropyl-(4'-tert.butyl)-4-phenyl-indenyl)]zirconium dichloride. More preferred said asymmetric catalyst is not silica supported.

The above described asymmetric catalyst components are prepared according to the methods described in WO 01/48034.

In a preferred embodiment the asymmetric catalyst system is obtained by the emulsion solidification technology as described in WO 03/051934. This document is herewith included in its entirety by reference. Hence in this specific embodiment the asymmetric catalyst is preferably in the form of solid catalyst particles, obtainable by a process comprising the steps of

a) preparing a solution of one or more asymmetric catalyst components;

b) dispersing said solution in a solvent immiscible therewith to form an emulsion in which said one or more catalyst components are present in the droplets of the dispersed phase,

c) solidifying said dispersed phase to convert said droplets to solid particles and optionally recovering said particles to obtain said catalyst.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or -cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$ alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

The recovered particles have preferably an average size range of 5 to 200 $\mu$m, more preferably 10 to 100 $\mu$m.

Moreover, the form of solidified particles have preferably a spherical shape, a predetermined particles size distribution and a surface area as mentioned above of preferably less than 25 m$^2$/g, still more preferably less than 20 m$^2$/g, yet more preferably less than 15 m$^2$/g, yet still more preferably less than 10 m$^2$/g and most preferably less than 5 m$^2$/g, wherein said particles are obtained by the process as described above.

For further details, embodiments and examples of the continuous and dispersed phase system, emulsion formation method, emulsifying agent and solidification methods reference is made e.g. to the above cited international patent application WO 03/051934.

Preferred as cocatalysts for metallocenes and non-metallocenes, if desired, are the aluminoxanes, in particular the $C_1$-$C_{10}$-alkylaluminoxanes, most particularly methylaluminoxane (MAO). Such aluminoxanes can be used as the sole cocatalyst or together with other cocatalyst(s). Thus besides or in addition to aluminoxanes, other cation complex forming catalysts activators can be used. Said activators are commercially available or can be prepared according to the prior art literature.

Further aluminoxane cocatalysts are described i.a. in WO 94/28034. These are linear or cyclic oligomers of having up to 40, preferably 3 to 20, -(Al(R''')O)- repeat units (wherein R''' is hydrogen, $C_1$-$C_{10}$-alkyl (preferably methyl) or $C_6$-$C_{18}$-aryl or mixtures thereof).

The use and amounts of such activators are within the skills of an expert in the field. As an example, with the boron activators, 5:1 to 1:5, preferably 2:1 to 1:2, such as 1:1, ratio of the transition metal to boron activator may be used. In case of preferred aluminoxanes, such as methylaluminumoxane (MAO), the amount of Al, provided by aluminoxane, can be chosen to provide a molar ratio of Al:transition metal e.g. in the range of 1 to 10 000, suitably 5 to 8000, preferably 10 to 7000, e.g. 100 to 4000, such as 1000 to 3000. Typically in case of solid (heterogeneous) catalyst the ratio is preferably below 500.

The quantity of cocatalyst to be employed in the catalyst of the invention is thus variable, and depends on the conditions and the particular transition metal compound chosen in a manner well known to a person skilled in the art.

Any additional components to be contained in the solution comprising the organotransition compound may be added to said solution before or, alternatively, after the dispersing step.

The present invention is further concerned with a coated article including the polypropylene composition as described herein as a layer. The layer can be located on cellulose-based sheet for example paper, paperboard, cardboard and the like. The layer can also be located on metal sheets for example tinplate, aluminium film and the like. The term "located on" means that the layer formed by the polypropylene composition according to the present invention is in direct contact with the substrate without any intermediate layer. The main end-uses for such extrusion coated articles are in packaging applications, like liquid packaging for milk, juice, wine or other liquids, flexible packaging for meat, cheese and medical products, rigid packaging like detergent cartons, cup and plate boards for oven or microwave use or sterilizable food packaging, but also for photographic paper or industrial applications like paper reel and ream wraps.

The process for coating a coated article according to the present invention applying the polypropylene composition as described above is characterized by draw down speeds of 300 m/min, more preferably 400 m/min and most preferably 500 m/min with respect to draw down of 10 g of coating layer per square meter of substrate.

More preferably the process for coating a coated article according to the present invention applying the polypropylene composition as described above is characterized by extremely low neck-in. This extremely low neck-in is further surprisingly independent from the draw down speed. When the lag down is $20 g/m^2$ of coating, the neck-in preferably is below 120 mm, more preferably below 110 mm at a draw down speed of 100 m/min. The neck-in preferably is below 110 mm and more preferably below 100 mm at a draw down speed of 200 m/min. At a draw down speed of 300 m/min, the neck-in preferably is below 110 mm and more preferably below 105 mm, whereas at a draw down speed of 400 m/min, the neck-in preferably is below 115 mm and more preferably below 110 mm.

The polypropylene composition of the present invention may also be used for extrusion foamed articles, such as door liners, engine shields or roof/trunk liners in automobiles; or trays and tableware as well as insulation and protective packaging applications. Extrusion foaming is usually carried out by dissolving of a blowing agent gas in the polypropylene melt, cell nucleation, cell growth and stabilization. In order to perform these steps, foaming extruders are longer than standard types, typically with an overall L/D ratio of more than 40, in either a single or tandem extruder configuration.

The present invention is also concerned with the use of the polypropylene base resin according to the present invention for extrusion coating or extrusion foaming.

**Examples**

**1. Methods**

**a) Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg. It is also designated in this application as "$MFR_2$"

**b) Melting and crystallisation temperature**

The melting and crystallisation temperature $T_m$ and $T_c$ are determined according to ISO 11357-3 with a TA-Instruments 2920 Dual-Cell with RSC refrigeration apparatus and data station. A heating and cooling rate of 10 °C/min is applied in a heat / cool / heat cycle between +23 and +210°C, the crystallisation temperature $T_c$ being determined in the cooling step and the $T_m$ melting temperature being determined in the second heating step.

**c) Comonomer content**

Quantitative Fourier transform infrared (FTIR) spectroscopy was used to quantify the amount of comonomer. Calibration was achieved by correlation to comonomer contents determined by quantitative nuclear magnetic resonance (NMR) spectroscopy.

The calibration procedure based on results obtained from quantitative $^{13}$C-NMR spectroscopy was undertaken in the conventional manner well documented in the literature.

The amount of comonomer (N) was determined as weight percent (wt%) via:

$$N = k_1 (A / R) + k_2$$

wherein A is the maximum absorbance defined of the comonomer band, R the maximum absorbance defined as peak height of the reference peak and with $k_1$ and $k_2$ the linear constants obtained by calibration. The band used for ethylene content quantification is selected depending if the ethylene content is random (730 cm$^{-1}$) or block-like (720 cm$^{-1}$). The absorbance at 4324 cm$^{-1}$ was used as a reference band.

**d) Bulk density**

The bulk density of the highly porous polypropylene carrier was determined according to ISO 60:1997.

**e) Strain Hardening Factor (SHF)**

The strain hardening factor is defined as

$$SHF = \frac{\eta_E^+(t, \dot{\varepsilon})}{\eta_{LVE}^+(t)} = \frac{\eta_E^+(t, \dot{\varepsilon})}{3\eta^+(t)}$$

wherein

$\eta_E^+(t, \dot{\varepsilon})$ is the uniaxial extensional viscosity; and $\eta_{LVE}^+(t)$ is three times the time dependent shear viscosity $\eta^+(t)$ in the linear range of deformation.

The determination of the linear viscoelastic envelop in extension $\eta_{LVE}^+(t)$ , using IRIS Rheo Hub 2008, required the calculation of the discrete relaxation time spectrum from the storage and loss modulus data (G', G" ($\omega$)). The linear viscoelastic data (G', G" ($\omega$)) is obtained by frequency sweep measurements undertaken at 180°C, on a Anton Paar MCR 300 coupled with 25 mm parallel plates. The underlying calculation principles used for the determination of the discrete relaxation spectrum are described in Baumgärtel M, Winter HH, "Determination of the discrete relaxation and retardation time spectra from dynamic mechanical data", Rheol Acta 28:511519 (1989) which is incorporated by reference in its entirety.

IRIS RheoHub 2008 expresses the relaxation time spectrum as a sum of N Maxwell modes

$$\overset{o}{G}(t) = G_e \cdot \sum_1^N g_i \cdot e^{-\frac{t}{\lambda_i}}$$

wherein $g_i$ and $\lambda_i$ are material parameters and $G_e$ is the equilibrium modulus.

The choice for the maximum number of modes, $N$ used for determination of the discrete relaxation spectrum, is done by using the option "optimum" from IRIS RheoHub 2008. The equilibrium modulus $G_e$ was set at zero.

The non-linear fitting used to obtain $\eta_{LVE}^+(t)$ is performed on IRIS Rheo Hub 2008, using the Lodge model.

The uniaxial extensional viscosity, $\eta_E^+(t, \dot{\varepsilon})$ is obtained from uniaxial extensional flow measurements, conducted on an Anton Paar MCR 501 coupled with the Sentmanat extensional fixture (SER-1). The temperature for the uniaxial extensional flow measurements was set at 180°C, applying extension rates $\partial\varepsilon/\partial t$ ranging from 0.3 s$^{-1}$ to 10 s$^{-1}$. and covering a range of Hencky strain

$$\varepsilon = (l - l_0) / l_0,$$

with $l_0$ being the original and l the actual sample fixation length, from 0.3 to 3.0.

Particularly care was taken for the preparation of the samples for extensional flow. The samples were prepared by compression moulding at 230 °C followed by slow cooling to room temperature (forced water or air cooling were not used). This procedure allowed obtaining well shaped samples free of residual stresses. The sample was left for some minutes at the testing temperature to ensure thermal stability (set temperature $\pm 0{,}1$ °C), before carrying out the uniaxial extensional flow measurements.

### e) Rheotens test

The test described herein follows ISO 16790:2005.

The strain hardening behaviour is determined by the method as described in the article "Rheotens-Mastercurves and Drawability of Polymer Melts", M. H. Wagner, Polymer Engineering and Sience, Vol. 36, pages 925 to 935. The strain hardening behaviour of polymers is analysed by Rheotens apparatus (product of Göttfert, Siemensstr.2, 74711 Buchen, Germany) in which a melt strand is elongated by drawing down with a defined acceleration. The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder HAAKE Polylab system and a gear pump with cylindrical die (L/D = 6.0/2.0 mm). The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand (2) drawn down is 120 mm/sec$^2$. The Rheotens was operated in combination with the PC program EXTENS. This is a real-time data-acquisition program, which displays and stores the measured data of tensile force and drawdown speed. The end points of the Rheotens curve (force versus pulley rotary speed) is taken as the melt strength and drawability values.

### f) Optical gel index

The optical gel index was measured with an OCS gel counting apparatus consisting of a measuring extruder (ME 25/5200 V1 with three temperature conditioning zones adjusted to a temperature profile of 200/220/230/240/240 °C), an adapter and a slit die (with an opening of 150 mm). Attached to this were a chill roll unit (CR-8 with a diameter of 140 mm), a heating and cooling unit (Haake C40P with a temperature range of 15°-90°C), a line camera (FS-5/4096 pixel for dynamic digital processing of grey tone images) and a winding unit (with automatic drawing control up to 10 N).

For the optical gel index measurements the materials were extruded at a screw speed of 30 rounds per minute, a drawing speed of 3 meters per min and a chill roll temperature of 40 °C to make thin cast films with a thickness of 70 μm and a width of 115 mm.

For each material the average number of gel dots on a film surface of 5 m$^2$ was detected by the line camera. The line camera was set to differentiate the gel dot size according to the following table:

| Gel dot size | Calculating Factor |
|---|---|
| up to 300 μm | x 0,1 |
| up to 600 μm | x 1,0 |
| up to 1000 μm | x 5,0 |
| >1000 μm | x 10,0 |

The number of gel dots detected for each size was multiplied with its respective calculating factor. The sum of all those values gave one final value which is called the optical gel index.

### 2. Compositions:

The intermediate single site catalyst-derived propylene homopolymer (SSC-PP1) was produced in a Borstar PP pilot plant in a two-step polymerization process starting in a bulk-phase loop reactor followed by polymerization in a gas phase reactor, varying the molecular weight by appropriate hydrogen feed. The catalyst used in the polymerization process was a metallocene single site catalyst as described in example 1 of EP 1741725 A1. The reaction conditions are listed in table 1.

**Table 1** - Reaction conditions in polymerization

| resin | | SSC-PP1 |
|---|---|---|
| **Prepolymerization** | Residence time [h] | 0.31 |
| | Temperature [°C] | 30 |

(continued)

| resin | | SSC-PP1 |
|---|---|---|
| **Loop reactor** | Temperature [°C] | 75 |
| | Residence Time [h] | 0.4 |
| | MFR$_2$ [g/10 min] | 0.2 |
| **Gas phase reactor** | Temperature [°C] | 85 |
| | Residence Time [h] | 2.8 |
| | MFR$_2$ [g/10 min] | 0.4 |
| **final MFR$_2$ [g/10 min]**[1] | | 0.25 |
| [1] (230 °C, 2.16 kg) | | |

The intermediate product SSC-PP1 was subjected to an in-line reactive extrusion in the presence of a butadiene masterbatch composition and peroxide masterbatch composition as described in the following.

The oligomeric diene masterbatch composition used was as ACCUREL® PA104 (supplier: Membrana GmbH, DE) based on the highly porous polypropylene homopolymer carrier ACCUREL® XP100-84 (supplier: Membrana GmbH, DE) having a void content of 83 % and a bulk density of 95 kg/m$^3$. The peroxide masterbatch composition used was TRIGONOX® BPIC 37.5PP-PD (supplier: AKZO NOBEL Polymer Chemicals BV, NL) based on the highly porous polypropylene homopolymer carrier ACCUREL® MP100 (supplier: Membrana GmbH, DE) having a void content of 78 % and a bulk density of 130 kg/m$^3$.

Both the butadiene masterbatch and the peroxide masterbatch were fed to the polymer melt in the extruder in a twin screw extruder ZSK18 (Coperion GmbH, Germany) having a barrel diameter of 18 mm and an L/D-ratio of 40 equipped with a high intensity mixing screw having three kneading zones and a two-step degassing setup. A temperature setting: 190/220/225/230/230/210/200 °C was used with a melt temperature profile with initial temperature T1 = 220°C in the feed zone, maximum temperature T2 = 230°C in the last kneading zone and a final temperature T3 = 200°C in the die zone, all temperatures being defined as barrel, was selected. The screw speed was set at 300 rpm. Following the melt-mixing step, the resulting polymer melt was pelletized in an underwater pelletizer or after solidification of one or more strands in a waterbath in a strand pelletizer at a water temperature of 40°C. The throughput was 5 kg/h.

Reaction conditions and rheological parameters are summarized in Table 2.

## Table 2

| | | Ex. 1 | Ex. 2 | CE 1 | CE 2 | WF420 HMS[##] |
|---|---|---|---|---|---|---|
| | SSC-PP1[#] | 95.7 | 95.1 | 97.7 | 95.1 | |
| Reactants and properties | Peroxide masterbatch [wt.-%] | 1.0 | 1.6 | 1.0 | 1.0 | |
| | Butadiene masterbatch [wt.-%] | 3.0 | 3.0 | 1. 0 | 2.0 | |
| | Additives [wt.-%] | 0.3 | 0.3 | 0.3 | 0.3 | |
| | Temperature range [°C] | 190-230 | 190-230 | 190-230 | 190-230 | |
| | Screw speed [rpm] | 300 | 300 | 300 | 300 | |
| | Throughput [kg/h] | 5 | 5 | 5 | 5 | |
| product | | | | | | |
| Final properties | $MFR_2$ [g/10 min] | 11 | 21 | 22 | 15 | 22 |
| | SHF (3 / 2.5) [-][###] | 2.5 | — | — | 1.8 | 2.9 |
| | SHF (1 / 2.0) [-][####] | 2.0 | — | — | 1.4 | 1.9 |
| | Optical gel index [-] | 318 | 498 | 5482 | 2782 | 951 |
| | F30 melt strength [cN] | 5.1 | 4.9 | 1.4 | 2.9 | 3.9 |
| | Drawability [mm/s] | 257 | 278 | 211 | 241 | 274 |

[#] intermediate polypropylene resin characterized in Table 1 above

[##] The commercial HMS-PP homopolymer WF420HMS available from Borealis Polyolefine GmbH which is produced on the base of a ZN-PP homopolymer was used as comparative example.

[###] strain hardening factor (SHF) measured at a strain rate of $3.0\ s^{-1}$ and a Hencky strain of 2.5.

[####] strain hardening factor (SHF) measured at a strain rate of $1.0\ s^{-1}$ and a Hencky strain of 2.0.

It can be seen from the above Table 2 that Example 1 and 2 prepared by in-line reactive processing according to the present invention achieve LCB polypropylene with excellent overall properties including high melt strength, drawability, strain hardening and further exhibit very low gel contents, not yet available for HMS polypropylene. The SHF values are indicative for a high level of long chain branching, not achieved by comparative resins, especially the WF420HMS standard used so far. Due to the low gel contents the inventive polypropylene can be used directly in extrusion coating or extrusion foaming which makes the products very cost-effective in said processes.

In a further test procedure another intermediate single site catalyst-derived propylene homopolymer SSC-PP2 was produced in a Borstar PP pilot plant in a two-step polymerization process starting in a bulk-phase loop reactor followed by polymerization in a gas phase reactor, varying the molecular weight by appropriate hydrogen feed for producing a $MFR_2$ of 1 g/10 min. The catalyst used in the polymerization process was a metallocene single site catalyst as described in example 1 of EP 1741725 A1. Process conditions for preparing the intermediate polypropylene are given in Table 3 below.

This intermediate polypropylene was subjected to a reactive melt extrusion process with the same butadiene masterbatch and peroxide masterbatch as above on a ZSK32 extruder with a temperature setting: 190/220/225/230/230/230/230/220/210/200 °C and a screw speed of 300 rpm. A throughput of 45 kg/h was achieved. In the in-line processing the reactants as indicated in Table 4 below were used.

**Table 3** - Reaction conditions in polymerization

| resin | | SSC-PP2 |
|---|---|---|
| **Prepolymerization** | Residence time [h] | 0.61 |
| | Temperature [°C] | 30 |
| **Loop reactor** | Temperature [°C] | 75 |
| | Residence Time [h] | 0.64 |
| | $MFR_2$ [g/10 min] | 1.0 |
| **Gas phase reactor** | Temperature [°C] | 80 |
| | Residence Time [h] | 2.4 |
| | $MFR_2$ [g/10 min] | 1.0 |
| **final $MFR_2$ [g/10 min][1]** | | 1.0 |
| [1] (230 °C, 2.16 kg) | | |

**Table 4**

| Example | | Ex.3 | Ex.4 | Ex.5 | Ex.6 | CE 3 | CE 4 | CE 5 | WE100HMS (Reference) | WB180HMS (Reference) |
|---|---|---|---|---|---|---|---|---|---|---|
| | | (Ref. Ex.)+ | (Ref. Ex.)+ | | | | | | | |
| SSC-PP2# | wt-% | 94.5 | 92.4 | 94.9 | 93.1 | 98.0 | 91.2 | 89.1 | | |
| POX-MB* | wt-% | 1 | 1 | 1.6 | 1.6 | 1 | 1.6 | 1.9 | | |
| PB-MB** | wt-% | 4.5 | 6.6 | 3.5 | 5.3 | 1 | 7.2 | 9 | | |
| $MFR_2$ | g/10min | 11.3 | 6.5 | 22.1 | 11.1 | 24.2 | 5.6 | 3.4 | 11.2 | 6.8 |
| SHF(3/2.5)## | - | 2.8 | 3.3 | 4.3 | 3.4 | - | - | - | 2.2 | 2.8 |
| SHF(1/2.0)### | - | 1.7 | 2.2 | 2.2 | 2.1 | - | - | - | 1.6 | 2.0 |
| F30 Melt strength | cN | 6.2 | 11.7 | 4.6 | 9.3 | 1.8 | 14.8 | 20.1 | 5.6 | 9.6 |
| v30 drawability | mm/s | 253 | 243 | 271 | 263 | 234 | 250 | 250 | 237 | 241 |
| Optical Gel Index | [-] | 159 | 75 | 669 | 848 | 12 545 | 10 374 | 11 335 | 3718 | 65 |

+ Ref.Ex.= Reference Example-outside the scope of the invention

\* peroxide masterbatch composition

\*\* polybutadiene masterbatch composition

\# intermediate polypropylene resin characterized in Table 3 above

\#\# strain hardening factor (SHF) measured at a strain rate of 3.0 $s^{-1}$ and a Hencky strain of 2.5.

\#\#\# strain hardening factor (SHF) measured at a strain rate of 1.0 $s^{-1}$ and a Hencky strain of 2.0.

EP 2 492 293 B1

It can be seen from these examples that melt strength is excellent and gel contents are sharply reduced compared to prior art reference materials. Furthermore, the intermediate polypropylene could be produced at higher productivity levels of the catalyst due to the use of an increased $MFR_2$ of the starting polypropylene resin in the reactive processing while still achieving highly desirable physical properties of the final resins.

According to preferred embodiments of the present invention, intermediate polypropylenes may be used which have an $MFR_2$ of from 0.5 to 2.6 which gave, during the inventive processing improved catalyst productivities of from 20 to 28 kg polypropylene/g catalyst.

## Claims

1. Polypropylene composition comprising a polypropylene base resin whereby the polypropylene base resin has a MFR (2.16 kg, 230 °C, ISO 1133) of 7.0 to 35 g/10min and an optical gel index of 1000 or less, measured with an OCS gel counting apparatus on thin cast films with a film thickness of 70 $\mu$m which were produced with a chill roll temperature of 40 °C, whereby the polypropylene base resin has a strain hardening factor (SHF) of 3.3 to 7.0 when measured at a strain rate of 3.0 $s^{-1}$ and a Hencky strain of 2.5.

2. Polypropylene composition according to claim 1, wherein the polypropylene base resin has a MFR (2.16 kg, 230 °C, ISO 1133) of 7.0 to 28 g/10min.

3. Polypropylene composition according to claim 1 or 2, wherein the polypropylene base resin has a strain hardening factor (SHF) of 3.3 to 5.0 when measured at a strain rate of 3.0 $s^{-1}$ and a Hencky strain of 2.5.

4. Polypropylene composition according to any one of the preceding claims, whereby the polypropylene base resin has a F30 melt strength of 4 to 18 cN and a drawability v30 of 200 mm/s or higher as determined in the Rheotens test according to ISO 16790:2005 at 200 °C.

5. Polypropylene composition according to any one of the preceding claims whereby the polypropylene base resin is a polypropylene homopolymer having a melting temperature Tm in the range of 135 to 165 °C.

6. Process for the production of a polypropylene composition according to any one of claims 1 to 5, **characterized in that** a single site catalyst derived polypropylene intermediate base resin having a MFR (2.16 kg, 230 °C, ISO 1133) of 6.0 g/10min or lower is mixed with a peroxide masterbatch composition and an oligomeric diene masterbatch composition to form a pre-mixed material; and the pre-mixed material is melt mixed in a melt mixing device at a barrel temperature in the range of 180 to 300 °C.

7. Process according to claim 6, wherein peroxide masterbatch composition is added in an amount of 0.5 to 4.0 wt.%, based on the total polypropylene composition.

8. Process according to claim 6 or 7, wherein the oligomeric diene masterbatch composition is added in an amount of 0.5 to 20 wt.%, based on the total polypropylene composition.

9. Process according to any one of claims 6 to 8, wherein the polypropylene intermediate base resin derived from said single site catalyst has a molecular weight distribution Mw/Mn in the range of from 1.5 to 4.0.

10. Process according to any one of claims 6 to 9, wherein the melt mixing device includes a feed zone, a kneading zone and a die zone, whereby an initial barrel temperature T1 is maintained in the feed zone, a barrel temperature T2 is maintained in the kneading zone and a die barrel temperature T3 is maintained in the die zone, whereby the barrel temperatures T1, T2, and T3 satisfy the following relation:

$$T1 < T3 < T2.$$

11. Extrusion foamed or extrusion coated article including the polypropylene composition according to any one of claims 1 to 5.

12. Use of a polypropylene composition as defined in any one of claims 1 to 5 for extrusion foaming or extrusion coating.

**Patentansprüche**

1. Polypropylenzusammensetzung, umfassend ein Polypropylenbasisharz, wobei das Polypropylenbasisharz einen MFR (2,16 kg, 230 °C, ISO 1133) von 7,0 bis 35 g/10 min und einen optischen Gel-Index von 1000 oder weniger aufweist, der mit einem OCS-Gel-Zählapparat an dünngegossenen Folien mit einer Foliendicke von 70 $\mu$m gemessen wird, die mit einer Kühlrollentemperatur von 40 °C hergestellt wurden, wobei das Poly-propylenbasisharz einen Dehnungshärtungsfaktor (SHF, für Englisch: strain hardening factor) von 3,3 bis 7,0 aufweist, wenn dieser bei einer Dehnungsrate von 3,0 s$^{-1}$ und einer Hencky-Dehnung von 2,5 gemessen wird.

2. Polypropylenzusammensetzung nach Anspruch 1, wobei das Polypropylenbasisharz einen MFR (2,16 kg, 230 °C, ISO 1133) von 7,0 bis 28 g/10 min aufweist.

3. Polypropylenzusammensetzung nach Anspruch 1 oder 2, wobei das Polypropylenbasisharz einen Dehnungshärtungsfaktor (SHF) von 3,3 bis 5,0 aufweist, wenn dieser bei einer Dehnungsrate von 3,0 s$^{-1}$ und einer Hencky-Dehnung von 2,5 gemessen wird.

4. Polypropylenzusammensetzung nach einem der vorhergehenden Ansprüche, wobei das Polypropylenbasisharz eine F30-Schmelzfestigkeit von 4 bis 18 cN und eine Zugfähigkeit v30 von 200 mm/s oder höher aufweist, ermittelt in dem Rheotens-Test gemäß ISO 16790:2005 bei 200 °C.

5. Polypropylenzusammensetzung nach einem der vorhergehenden Ansprüche, wobei das Polypropylenbasisharz ein Polypropylenhomopolymer ist, das eine Schmelztemperatur Tm in dem Bereich von 135 bis 165 °C aufweist.

6. Verfahren zum Herstellen von einer Polypropylenzusammensetzung nach einem der Ansprüche 1 bis 5, **dadurch gekennzeichnet, dass** ein Polypropylenzwischenbasisharz, das von einem single-site Katalysator stammt und einen MFR (2,16 kg, 230 °C, ISO 1133) von 6,0 g/10 min oder weniger aufweist, mit einer Peroxid-Masterbatchzusammensetzung und einer oligomeren Dien-Masterbatchzusammensetzung gemischt wird, um ein vorgemischtes Material zu bilden; und das vorgemischte Material in einer Schmelzmischvorrichtung bei einer Zylindertemperatur in dem Bereich von 180 bis 300 °C schmelzgemischt wird.

7. Verfahren nach Anspruch 6, wobei die Peroxid-Masterbatchzusammensetzung mit einer Menge von 0,5 bis 4,0 Gew.-%, basierend auf der gesamten Polypropylenzusammensetzung, zugegeben wird.

8. Verfahren nach Anspruch 6 oder 7, wobei die oligomeren Dien-Masterbatchzusammensetzung mit einer Menge von 0,5 bis 20 Gew.-%, basierend auf der gesamten Polypropylenzusammensetzung, zugegeben wird.

9. Verfahren nach einem der Ansprüche 6 bis 8, wobei das Polypropylenzwischenbasisharz, das von dem single-site Katalysator stammt, eine Molekulargewichtsverteilung Mw/Mn in dem Bereich von 1,5 bis 4,0 aufweist.

10. Verfahren nach einem der Ansprüche 6 bis 9, wobei die Schmelzmischvorrichtung eine Zufuhrzone, eine Knetzone und eine Düsenzone umfasst, wobei eine innere Zylindertemperatur T1 in der Zufuhrzone aufrechterhalten wird, eine Zylindertemperatur T2 in der Knetzone aufrechterhalten wird und eine Düsenzylindertemperatur T3 in der Düsenzone aufrechterhalten wird, wobei die Zylindertemperaturen T1, T2 und T3 die folgende Beziehung erfüllen:

$$T1 < T3 < T2.$$

11. Extrusionsgeschäumter oder extrusionsbeschichteter Artikel, der die Polypropylenzusammensetzung nach einem der Ansprüche 1 bis 5 umfasst.

12. Verwendung einer Polypropylenzusammensetzung nach einem der Ansprüche 1 bis 5 zum Extrusionsschäumen oder Extrusionsbeschichten.

**Revendications**

1. Composition de polypropylène comprenant une résine de base de polypropylène, la résine de base de polypropylène ayant un MFR (2,16 kg, 230 °C, norme ISO 1133) de 7,0 à 35 g/10 min et un indice de gel optique inférieur ou égal à 1 000, mesuré par un appareil de comptage de gel OCS sur des films moulés minces ayant une épaisseur de film de 70 $\mu$m qui sont produits avec une température de rouleau de refroidissement de 40 °C, la résine de base de polypropylène ayant un facteur de durcissement par écrouissage (SHF) de 3,3 à 7,0 lorsqu'il est mesuré à une vitesse de déformation de 3,0 s$^{-1}$ et une déformation selon Hencky de 2,5.

2. Composition de polypropylène selon la revendication 1, dans laquelle la résine de base de polypropylène a un MFR (2,16 kg, 230 °C, norme ISO 1133) de 7,0 à 28 g/10 min.

3. Composition de polypropylène selon la revendication 1 ou 2, dans laquelle la résine de base de polypropylène a un facteur de durcissement par écrouissage (SHF) de 3,3 à 5,0 lorsqu'il est mesuré à une vitesse de déformation de 3,0 s$^{-1}$ et une déformation selon Hencky de 2,5.

4. Composition de polypropylène selon l'une quelconque des revendications précédentes, dans laquelle la résine de base de polypropylène a une résistance à la fusion F30 de 4 à 18 cN et une aptitude à l'emboutissage v30 supérieure ou égale à 200 mm/s comme déterminées dans le test de Rheotens conformément à la norme ISO 16790:2005 à 200 °C.

5. Composition de polypropylène selon l'une quelconque des revendications précédentes, dans laquelle la résine de base de polypropylène est un homopolymère de polypropylène ayant une température de fusion Tm comprise dans la plage allant de 135 à 165 °C.

6. Procédé de production d'une composition de polypropylène selon l'une quelconque des revendications 1 à 5, **caractérisé en ce qu'**une résine de base intermédiaire de polypropylène dérivée d'un catalyseur à site unique ayant un MFR (2,16 kg, 230 °C, norme ISO 1133) inférieur ou égal à 6,0 g/10 min est mélangée avec une composition de mélange maître de peroxyde et une composition de mélange maître de diène oligomère pour former un matériau prémélangé ; et le matériau prémélangé est mélangé à l'état fondu dans un dispositif de mélange à l'état fondu à une température du corps comprise dans la plage allant de 180 à 300 °C.

7. Procédé selon la revendication 6, dans lequel la composition de mélange maître de peroxyde est ajoutée en une quantité de 0,5 à 4,0 % en poids, par rapport à la composition de polypropylène totale.

8. Procédé selon la revendication 6 ou 7, dans lequel la composition de mélange maître de diène oligomère est ajoutée en une quantité de 0,5 à 20 % en poids, par rapport à la composition de polypropylène totale.

9. Procédé selon l'une quelconque des revendications 6 à 8, dans lequel la résine de base intermédiaire de polypropylène dérivée dudit catalyseur à site unique a une distribution de poids moléculaires Mm/Mn comprise dans la plage allant de 1,5 à 4,0.

10. Procédé selon l'une quelconque des revendications 6 à 9, dans lequel le dispositif de mélange à l'état fondu comprend une zone d'alimentation, une zone de malaxage et une zone de filière, une température du corps T1 initiale étant maintenue dans la zone d'alimentation, une température du corps T2 étant maintenue dans la zone de malaxage et une température du corps T3 étant maintenue dans la zone de filière, les températures du corps T1, T2 et T3 satisfaisant à la relation suivante :

$$T1 < T3 < T2.$$

11. Article revêtu par extrusion ou moussé par extrusion comprenant la composition de polypropylène selon l'une quelconque des revendications 1 à 5.

12. Utilisation d'une composition de polypropylène telle que définie selon l'une quelconque des revendications 1 à 5 pour un moussage par extrusion ou un revêtement par extrusion.

**Fig. 1**

**Fig. 2**

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009133016 A
- KR 681871 B1
- EP 1847555 A
- EP 1903070 A
- WO 2010049370 A1
- EP 2386584 A1
- WO 03051934 A
- WO 0148034 A
- WO 9428034 A
- EP 1741725 A1

**Non-patent literature cited in the description**

- *CHEMICAL ABSTRACTS,* 2372-21-6
- **BAUMGÄRTEL M ; WINTER HH.** Determination of the discrete relaxation and retardation time spectra from dynamic mechanical data. *Rheol Acta,* 1989, vol. 28, 511519
- Rheotens-Mastercurves and Drawability of Polymer Melts. **M. H. WAGNER.** Polymer Engineering and Sience. vol. 36, 925-935